(19) **Europäisches Patentamt / European Patent Office / Office européen des brevets**

(11) **EP 4 619 286 B1**

(12) **FASCICULE DE BREVET EUROPEEN**

(45) Date de publication et mention de la délivrance du brevet:
**17.06.2026 Bulletin 2026/25**

(21) Numéro de dépôt: **23804730.2**

(22) Date de dépôt: **11.10.2023**

(51) Classification Internationale des Brevets (IPC):
*B60W 30/14* *(2006.01)*    *B60W 30/18* *(2012.01)*

(52) Classification Coopérative des Brevets (CPC):
**B60W 30/143; B60W 30/146; B60W 30/18145;**
B60W 2552/30; B60W 2556/50

(86) Numéro de dépôt international:
**PCT/FR2023/051580**

(87) Numéro de publication internationale:
**WO 2024/105316 (23.05.2024 Gazette 2024/21)**

(54) **GESTION DE LA VITESSE D'UN VÉHICULE AUTOMOBILE DANS UN VIRAGE**

VERWALTUNG DER GESCHWINDIGKEIT EINES KRAFTFAHRZEUGS IN EINER KURVE

MANAGING THE SPEED OF A MOTOR VEHICLE IN A CURVE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **14.11.2022 FR 2211781**

(43) Date de publication de la demande:
**24.09.2025 Bulletin 2025/39**

(73) Titulaire: **Stellantis Auto SAS
78300 Poissy (FR)**

(72) Inventeurs:
- **VIVET, Luc
  75016 PARIS 16 (FR)**
- **KOUBACHI, Mouad
  BENI MELLAL, 23000 (MA)**

(74) Mandataire: **ESIP
Stellantis Auto SAS
Service REIP - YT800
43, rue Jean Pierre Timbaud
78300 Poissy (FR)**

(56) Documents cités:
**US-A1- 2014 121 932    US-A1- 2018 362 001
US-A1- 2020 139 968    US-A1- 2021 300 364**

## Description

Domaine technique de l'invention

La présente invention concerne le domaine du véhicule autonome, notamment celui de la voiture autonome. L'invention porte en particulier sur un procédé de gestion de la vitesse d'un véhicule automobile dans un virage au moyen d'un dispositif informatique embarqué à bord du véhicule. L'invention concerne également un dispositif mettant en œuvre un tel procédé ainsi qu'un véhicule automobile comprenant un tel dispositif. L'invention s'applique aux véhicules automobiles tels que les véhicules terrestres à moteur, notamment les voitures.

## État de la technique antérieure

Il est connu que certains systèmes d'aide à la conduite de véhicules automobiles actuels, par exemple ceux équipant certaines voitures, fournissent des fonctionnalités qui permettent la prise en charge du guidage autonome des véhicules dans certains environnements de conduite particuliers. On sait aussi qu'un conducteur a tendance à ralentir à l'entrée d'un virage, à moduler la vitesse du véhicule dans le virage en fonction de la courbure de celui-ci et à augmenter progressivement la vitesse du véhicule à l'approche de la sortie du virage. En effet, autant pour des raisons de sécurité que de confort, un conducteur va généralement maintenir une accélération latérale relativement faible tout au long du virage, de l'ordre de $3m.s^{-2}$. Ainsi, pour reproduire fidèlement le comportement d'un conducteur, un système d'aide à la conduite d'un véhicule automobile se doit de gérer la vitesse d'un véhicule dans un virage de sorte à ralentir à l'entrée du virage, à moduler la vitesse du véhicule dans le virage selon la courbure du virage et à augmenter la vitesse du véhicule à l'approche de la sortie du virage. Pour ce faire, il convient donc que le système d'aide à la conduite soit en mesure de déterminer comment moduler la vitesse du véhicule tout au long du virage.

On connait par ailleurs du document US2020139968, ou du document US2021300364 un dispositif d'aide à la conduite pour contrôler la vitesse d'un véhicule, en particulier lors de virages.

## Résumé de l'invention

L'invention vise à satisfaire ce besoin. L'invention a en particulier pour but de fournir un procédé et un dispositif qui permettent à un système d'aide à la conduite de reproduire fidèlement le comportement d'un conducteur dans un virage, notamment sur le plan du contrôle de la vitesse du véhicule tout au long du virage. L'invention vise en outre à fournir une solution qui soit en mesure de limiter les ressources de calcul nécessaires pour sa mise en œuvre. Par ce biais, l'invention vise à améliorer aussi bien le confort que la sécurité des véhicules équipés de systèmes d'aide à la conduite qui assument le guidage autonome des véhicules, notamment dans les virages.

Afin d'atteindre ces buts, l'invention concerne, selon un premier aspect, un procédé de gestion de la vitesse d'un véhicule automobile dans un virage au moyen d'un dispositif informatique embarqué à bord du véhicule, le procédé comprenant les étapes de :

    i) obtenir, en interagissant avec un système de navigation du véhicule, des données caractérisant l'évolution de la courbure de la chaussée en fonction de la distance parcourue ;

    ii) déterminer, sur la base des données caractérisant l'évolution de la courbure de la chaussée en fonction de la distance parcourue, des données caractérisant un premier lieu, ledit premier lieu étant situé vers l'entrée du virage ;

    iii) déterminer, sur la base des données caractérisant l'évolution de la courbure de la chaussée en fonction de la distance parcourue, des données caractérisant un deuxième lieu, ledit deuxième lieu étant situé vers la sortie du virage ;

    iv) déterminer, sur la base des données caractérisant l'évolution de la courbure de la chaussée en fonction de la distance parcourue, des données caractérisant un troisième lieu, ledit troisième lieu étant situé à un endroit où la courbure de la chaussée est maximale ;

    v) déterminer des données caractérisant un quatrième lieu, ledit quatrième lieu étant situé en amont du troisième lieu et en aval du premier lieu, étape au cours de laquelle sont déterminées des données caractérisant la pente maximale d'une fonction affine reliant la courbure de la chaussée au premier lieu et la courbure de la chaussée à un autre lieu en amont du troisième lieu, en fonction desquelles sont déterminées les données caractérisant un quatrième lieu ;

    vi) déterminer des données caractérisant un cinquième lieu, ledit cinquième lieu étant situé en aval du troisième lieu et en amont du deuxième lieu ; et

    vii) provoquer la gestion de la vitesse du véhicule en fonction des données caractérisant un premier lieu, des données caractérisant un deuxième lieu, des données caractérisant un quatrième lieu et des données caractérisant un cinquième lieu.

Selon une variante, l'étape vii) peut consister à provoquer une diminution constante de la vitesse du véhicule entre le premier lieu et le quatrième lieu, la conservation d'une vitesse constante entre le quatrième lieu et le cinquième lieu et l'augmentation constante de la vitesse entre le cinquième lieu et le deuxième lieu.

Selon une autre variante, des données caractérisant une valeur seuil de courbure minimale peuvent être utilisées au cours des étapes ii) et iii).

Selon encore une autre variante, au cours de l'étape vi), peuvent être déterminées des données caractérisant la pente minimale d'une fonction affine reliant la courbure de la chaussée au deuxième lieu et la courbure de la chaussée à un autre lieu en aval du troisième lieu, en fonction desquelles sont déterminées les données caractérisant un cinquième lieu.

Selon un deuxième aspect, l'invention concerne un dispositif de gestion de la vitesse d'un véhicule automobile dans un virage, le dispositif comprenant au moins une unité de traitement d'informations, comprenant au moins un processeur, et un support de stockage de données configurés pour mettre en œuvre un procédé tel que décrit ci-dessus.

Selon un troisième aspect, l'invention concerne un programme d'ordinateur comprenant des instructions de code de programme pour l'exécution des étapes d'un procédé tel que décrit ci-dessus lorsque ledit programme est exécuté par au moins un processeur.

Selon un quatrième aspect, l'invention concerne un support utilisable dans un ordinateur sur lequel un programme tel que décrit ci-dessus est enregistré.

Selon un cinquième aspect, l'invention concerne un véhicule automobile comprenant un dispositif tel que décrit ci-dessus.

## Brève description des figures

D'autres caractéristiques et avantages de l'invention apparaîtront à l'examen de la description détaillée ci-après, et des dessins annexés, sur lesquels :

[Fig. 1] est un schéma du contexte de la mise en œuvre d'un procédé selon l'invention ;
[Fig. 2] est un diagramme fonctionnel d'un dispositif selon l'invention ; et
[Fig. 3] est un organigramme des étapes d'un procédé selon l'invention ;
[Fig. 4] est un graphique illustrant au moins une étape du procédé selon l'invention ;
[Fig. 5] est un graphique illustrant au moins une étape du procédé selon l'invention ;
[Fig. 6] est un graphique illustrant l'évolution de la vitesse d'un véhicule automobile selon l'invention dans un virage.

## Description détaillée de l'invention

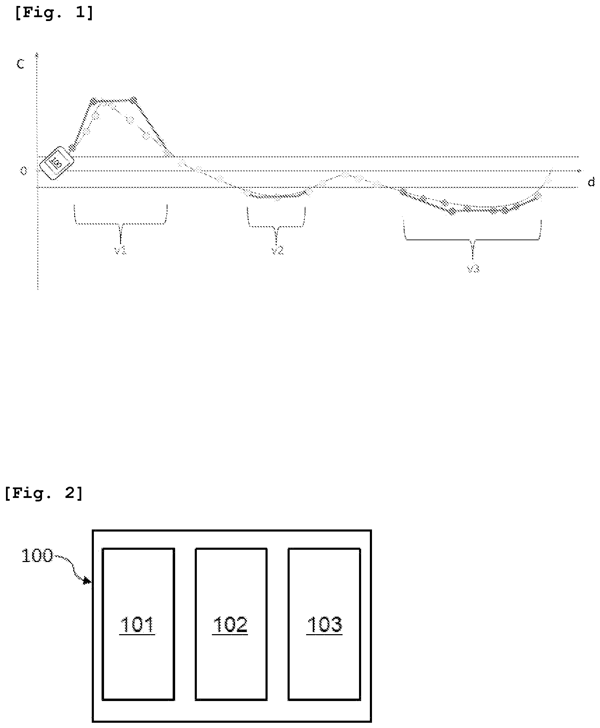

La figure 1 illustre de manière schématique le contexte de la mise en œuvre d'un procédé de gestion de la vitesse d'un véhicule automobile dans un virage selon l'invention décrit ci-dessous par un dispositif 100 de gestion de la vitesse d'un véhicule dans un virage selon l'invention décrit ci-après qui est embarqué à bord d'un véhicule automobile équipé d'un système d'aide à la conduite apte à gérer de manière autonome le guidage du véhicule. Lors de la mise en œuvre du procédé selon l'invention, des données caractérisant l'évolution de la courbure de la chaussée devant le véhicule en fonction de la distance parcourue sont obtenues, telles que celles qui sont illustrées par le graphique de la figure1. Ces données comprennent un certain nombre de lieux devant le véhicule, correspondant sur le graphique à des points, où la courbure de la chaussée est connue. Sur la base ce ces données, le dispositif 100 selon l'invention détermine une estimation d'une enveloppe minimaliste du contour de la chaussée dans chaque virage (v1, v2, v3), une telle enveloppe ayant une forme trapézoïdale, et il provoque ensuite une adaptation de la vitesse du véhicule en utilisant cette estimation. Le système d'aide à la conduite du véhicule est ainsi en mesure de gérer la vitesse du véhicule dans les virages de manière sûre et confortable, et ce tout en minimisant le temps qu'il doit consacrer et les ressources de calcul qu'il doit utiliser pour permettre cela.

Un dispositif 100 de gestion de la vitesse d'un véhicule automobile dans un virage selon l'invention est illustré sur la figure 2. Il s'agit d'un appareil informatique, qui comprend au moins une unité de traitement d'informations 101, comportant un ou plusieurs processeurs, un support de stockage de données 102, sur lequel est notamment enregistré un programme qui comprend des instructions de code de programme pour l'exécution des étapes du procédé selon l'invention décrit ci-après, et une interface d'entrée et sortie 103 permettant la réception et l'émission de données.

Selon un mode de réalisation de l'invention, le dispositif 100 selon l'invention est hébergé sur un ou plusieurs calculateurs ou autres unités de commande électroniques du véhicule. Selon le mode de réalisation préféré, le dispositif 100 selon l'invention est hébergé sur un calculateur indépendant et il interagit par le biais de son interface d'entrée et sortie 103 et au moyen d'un réseau de communication filaire du véhicule (e.g. CAN, Ethernet) avec un calculateur du système d'aide à la conduite du véhicule, qui, selon l'invention, fournit au moins une fonctionnalité de conduite autonome. Selon un autre mode de réalisation, le dispositif 100 selon l'invention fait partie intégrante d'un calculateur du système d'aide à la conduite.

Ainsi, quel que soit le mode de réalisation, le dispositif 100 selon l'invention est toujours en mesure d'interagir, par le biais de son interface d'entrée et sortie 103, non seulement avec le système d'aide à la conduite du véhicule, mais également, via celui-ci, avec tout autre appareillage qui équipe et/ou interagit avec le système d'aide à la conduite. Or, selon l'invention, le système d'aide à la conduite du véhicule interagit notamment avec un système de navigation du véhicule (e.g. GPS), qui, à minima, est en mesure de fournir des données caractérisant l'évolution de la courbure de la chaussée en fonction de la distance parcourue, et donc des virages que celle-ci délimite. Ainsi, en faisant partie intégrante ou en interagissant avec un tel système d'aide à la conduite, le dispositif 100 selon l'invention est avantageusement en mesure, notamment, d'obtenir des données caractérisant l'évolution de la courbure de la chaussée en fonction de la distance parcourue.

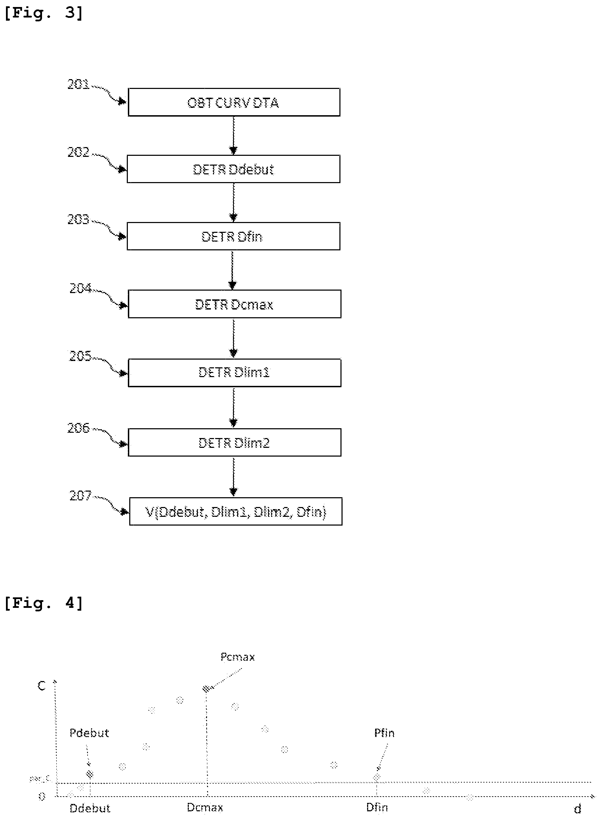

Selon l'invention, tous les éléments décrits ci-dessus contribuent pour permettre la mise en œuvre à bord d'un véhicule automobile d'un procédé de gestion de la vitesse d'un véhicule automobile dans un virage selon l'invention, tel que décrit ci-dessous en lien avec les figures 3-7.

Selon une première étape 201 du procédé selon l'invention, le dispositif 100 selon l'invention obtient des données caractérisant l'évolution de la courbure de la chaussée en fonction de la distance parcourue. Préférentiellement, ces données sont obtenues en interagissant avec un système de navigation du véhicule, par exemple un système de navigation qui reçoit lui-même ces données d'un système de transport intelligent au moyen de réseaux et protocoles de communication sans fil conventionnels. Ainsi, au terme de cette première étape du procédé selon l'invention, sont par exemples obtenues des données qui déterminent le graphique illustré sur la figure 4, qui forme une représentation d'un virage sur la chaussée dans un repère orthogonal.

Ensuite, selon une deuxième étape 202 du procédé selon l'invention, le dispositif 100 selon l'invention utilise les données caractérisant l'évolution de la courbure selon la distance parcourue pour déterminer des données caractérisant un premier lieu situé vers l'entrée du virage. En d'autres termes, le dispositif 100 selon l'invention s'affaire à ce stade à déterminer un premier point qu'il considère comme marquant le début du virage (Pdebut). Préférentiellement, il utilise pour ce faire des données caractérisant une valeur seuil de courbure minimale (par_C), en considérant le premier point dont la courbure dépasse la valeur seuil de courbure minimale comme marquant le début du virage. Le dispositif 100 selon l'invention en déduit la distance à laquelle se trouve le premier lieu (Ddebut).

De manière similaire, selon une troisième étape 203 du procédé selon l'invention, le dispositif 100 selon l'invention utilise les données caractérisant l'évolution de la courbure selon la distance parcourue pour déterminer des données caractérisant un deuxième lieu situé vers la sortie du virage, plus spécifiquement le point qu'il considère comme marquant la fin du virage (Pfin), en sélectionnant dans ce cas le dernier point pour lequel la courbure de la chaussée reste supérieure à la valeur seuil de courbure minimale (par_C). Il en déduit la distance à laquelle se trouve le deuxième lieu (Dfin).

Puis, selon une quatrième étape 204 du procédé selon l'invention, le dispositif 100 selon l'invention utilise les données caractérisant l'évolution de la courbure selon la distance parcourue pour déterminer des données caractérisant un troisième lieu situé à un endroit où la courbure de la chaussée est maximale (Pcmax), dont il déduit la distance à laquelle se trouve ce troisième lieu (Dcmax).

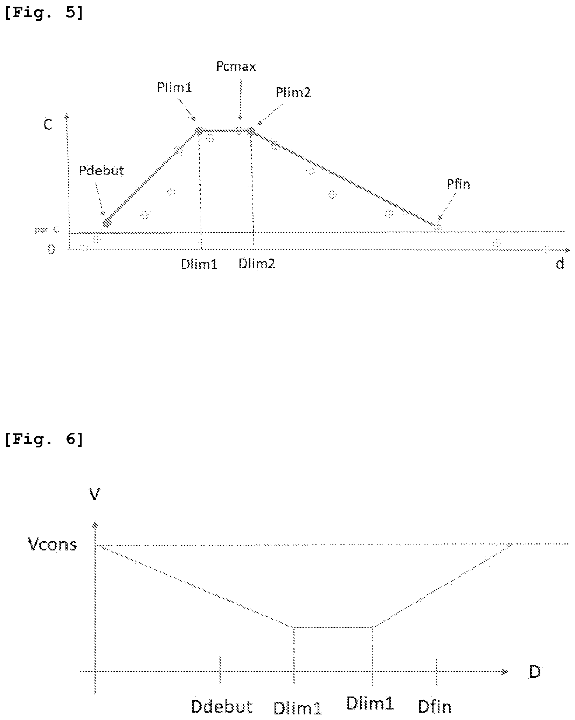

Ensuite, selon une cinquième étape 205 du procédé selon l'invention, le dispositif 100 selon l'invention détermine des données caractérisant un quatrième lieu situé en amont du troisième lieu et en aval du premier lieu. A ce stade, le dispositif 100 selon l'invention cherche donc à former l'enveloppe minimaliste du virage autour du cœur du virage, là où la courbure de la chaussée est maximale. Pour ce faire, afin de déterminer le quatrième lieu, un premier sommet du trapèze illustré sur la figure 5, le dispositif 100 selon l'invention détermine des données caractérisant la pente maximale d'une fonction affine reliant la courbure de la chaussée au premier lieu (Pdebut), celui considéré comme marquant le début du virage, et la courbure de la chaussée à un autre lieu en amont du troisième lieu (Pcmax), en fonction desquelles il détermine ensuite les données caractérisant un quatrième lieu, et donc un premier sommet du trapèze. En effet, en utilisant le premier point (Pdebut) et chaque point antérieur au point où la courbure de la chaussée est maximale (chaque point antérieur à Pcmax), le dispositif 100 selon l'invention détermine la pente maximale d'une fonction affine reliant le premier point à un autre point, qu'il utilise ensuite pour en déduire la distance à laquelle se trouve le quatrième lieu (Dlim1). De manière mathématique, le dispositif 100 selon l'invention va ici déterminer les coordonnées d'un premier point limitant Plim1(Dlim1, Cmax), et il y parvient en résolvant successivement les équations :

$$Tmax = max(Tp\_idebut+1,...,Tp\_icmax) \text{ avec } Tp\_n = (Cn-Cdebut)/(Dn-Dedut)$$

et

$$Dlim1 = (Cmax-Cdebut)/Tmax+Ddebut.$$

De manière similaire, selon une sixième étape 206 du procédé selon l'invention, le dispositif 100 selon l'invention détermine des données caractérisant un cinquième lieu situé en aval du troisième lieu et en amont du deuxième lieu. A ce stade, le dispositif 100 selon l'invention cherche donc à terminer l'enveloppe minimaliste du virage autour du cœur du virage. Pour ce faire, afin de déterminer le cinquième lieu, un deuxième sommet du trapèze, le dispositif 100 selon l'invention détermine cette fois-ci des données caractérisant la pente minimale d'une fonction affine reliant la courbure de la chaussée au deuxième lieu (Pfin), celui considéré comme marquant la fin du virage, et la courbure de la chaussée à un autre lieu en aval du troisième lieu, en fonction desquelles il détermine ensuite les données caractérisant un cinquième lieu, et donc un deuxième sommet du trapèze. En effet, en utilisant le dernier point (Pfin) et chaque point postérieur au point où la courbure de la chaussée est maximale (chaque point postérieur à Pcmax), le dispositif 100 selon l'invention détermine la pente minimale d'une fonction affine reliant le dernier point à un autre point, qu'il utilise ensuite pour en déduire la distance à laquelle se trouve le cinquième lieu (Dlim2). De manière mathématique, le dispositif 100 selon l'invention va ici déterminer les coordonnées d'un deuxième point limitant Plim2(Dlim2, Cmax), et il y parvient en résolvant successivement les équations : $Tmin=min(Tp\_icmax,...,Tp\_ifin-1)$ avec $Tp\_n=(Cfin-Cn)/(Dfin-Dn)$ et $Dlim2=(Cmax-Cfin)/Tmin+Dfin$.

Enfin, selon une septième étape 207 du procédé selon l'invention, le dispositif 100 selon l'invention provoque la gestion de la vitesse du véhicule en fonction des données caractérisant un premier lieu, des données caractérisant un deuxième lieu, des données caractérisant un quatrième lieu et des données caractérisant un cinquième lieu. En d'autres termes, à ce stade du procédé, le dispositif 100 selon l'invention instruit le système d'aide à la conduite du véhicule de gérer la vitesse du véhicule en fonction des points qui forment le trapèze illustré sur la figure 5, à savoir Pdebut, Plim1, Plim2 et Pfin. Préférentiellement, comme illustré sur la figure 6, le dispositif 100 selon l'invention provoque alors une diminution constante de la vitesse du véhicule entre le premier lieu (Ddebut) et le quatrième lieu (Dlim1), la conservation d'une vitesse constante entre le quatrième lieu (Dlim1) et le cinquième lieu (DLim2) et l'augmentation constante de la vitesse entre le cinquième lieu (Dlim2) et le deuxième lieu (Dfin).

Ainsi, grâce au procédé et au dispositif selon l'invention décrits ci-dessus, une solution est fournie pour permettre à un système d'aide à la conduite d'un véhicule automobile de reproduire fidèlement le comportement d'un conducteur dans un virage, notamment sur le plan du contrôle de la vitesse du véhicule tout au long du virage. Par ce biais, l'invention contribue à améliorer aussi bien le confort que la sécurité des véhicules équipés de systèmes d'aide à la conduite qui assument le guidage autonome des véhicules, notamment dans les virages.

## Revendications

1. Procédé de gestion de la vitesse d'un véhicule automobile dans un virage au moyen d'un dispositif informatique (100) embarqué à bord du véhicule, le procédé comprenant les étapes de :

    i) obtenir (201), en interagissant avec un système de navigation du véhicule, des données caractérisant l'évolution de la courbure de la chaussée en fonction de la distance parcourue ;
    ii) déterminer (202), sur la base des données caractérisant l'évolution de la courbure de la chaussée en fonction de la distance parcourue, des données caractérisant un premier lieu, ledit premier lieu étant situé vers l'entrée du virage ;
    iii) déterminer (203), sur la base des données caractérisant l'évolution de la courbure de la chaussée en fonction de la distance parcourue, des données caractérisant un deuxième lieu, ledit deuxième lieu étant situé vers la sortie du virage ;
    iv) déterminer (204), sur la base des données caractérisant l'évolution de la courbure de la chaussée en fonction de la distance parcourue, des données caractérisant un troisième lieu, ledit troisième lieu étant situé à un endroit où la courbure de la chaussée est maximale ;
    v) déterminer (205) des données caractérisant un quatrième lieu, ledit quatrième lieu étant situé en amont du troisième lieu et en aval du premier lieu, étape au cours de laquelle sont déterminées des données caractérisant la pente maximale d'une fonction affine reliant la courbure de la chaussée au premier lieu et la courbure de la chaussée à un autre lieu en amont du troisième lieu, en fonction desquelles sont déterminées les données caractérisant le quatrième lieu ;
    vi) déterminer (206) des données caractérisant un cinquième lieu, ledit cinquième lieu étant situé en aval du troisième lieu et en amont du deuxième lieu ; et
    vii) provoquer (207) la gestion de la vitesse du véhicule en fonction des données caractérisant le premier lieu, des données caractérisant le deuxième lieu, des données caractérisant le quatrième lieu et des données caractérisant le cinquième lieu.

2. Procédé selon la revendication 1, **caractérisé en ce que** l'étape vii) consiste à provoquer une diminution constante de la vitesse du véhicule entre le premier lieu et le quatrième lieu, la conservation d'une vitesse constante entre le quatrième lieu et le cinquième lieu et l'augmentation constante de la vitesse entre le cinquième lieu et le deuxième lieu.

3. Procédé selon l'une des revendications précédentes, **caractérisé en ce que** des données caractérisant une valeur seuil de courbure minimale sont utilisées au cours des étapes ii) et iii).

4. Procédé selon l'une des revendications précédentes, **caractérisé en ce que**, au cours de l'étape vi), sont déterminées des données caractérisant la pente minimale d'une fonction affine reliant la courbure de la chaussée au deuxième lieu et la courbure de la chaussée à un autre lieu en aval du troisième lieu, en fonction desquelles sont déterminées les données caractérisant le cinquième lieu.

5. Dispositif (100) de gestion de la vitesse d'un véhicule automobile dans un virage, **caractérisé en ce que** le dispositif comprend au moins une unité de traitement d'informations (101), comprenant au moins un processeur, et un support de stockage de données (102) configurés pour mettre en œuvre un procédé selon l'une quelconque des revendications précédentes.

6. Programme d'ordinateur comprenant des instructions de code de programme pour l'exécution des étapes d'un procédé selon l'une quelconque des revendications 1 à 4 lorsque ledit programme est exécuté par au moins un processeur.

7. Support utilisable dans un ordinateur, **caractérisé en ce qu'un** programme selon la revendication 6 y est enregistré.

8. Véhicule automobile, **caractérisé en ce qu'il** comprend un dispositif (100) selon la revendication 5.


**Patentansprüche**

1. Verfahren zur Steuerung der Geschwindigkeit eines Kraftfahrzeugs in einer Kurve mittels einer im Fahrzeug eingebauten Computervorrichtung (100), wobei das Verfahren die folgenden Schritte umfasst:

   i) (201) durch Interaktion mit einem Navigationssystem des Fahrzeugs Daten über die Entwicklung der Fahrbahnkrümmung in Abhängigkeit von der zurückgelegten Wegstrecke zu erhalten;
   ii) (202) auf der Grundlage der Daten, die die Entwicklung der Krümmung der Fahrbahn in Abhängigkeit von der zurückgelegten Wegstrecke charakterisieren, Daten zu ermitteln, die einen ersten Ort charakterisieren, wobei dieser erste Ort in Richtung des Kurveneingangs liegt;
   iii) (203) auf der Grundlage der Daten, die die Entwicklung der Krümmung der Fahrbahn in Abhängigkeit von der zurückgelegten Strecke charakterisieren, Daten zu ermitteln, die einen zweiten Ort charakterisieren, wobei sich der zweite Ort in Richtung der Ausfahrt aus der Kurve befindet;
   iv) auf der Grundlage der Daten über die Entwicklung der Krümmung der Fahrbahn in Abhängigkeit von der zurückgelegten Wegstrecke Daten zu ermitteln (204), die einen dritten Ort kennzeichnen, wobei der dritte Ort an einem Ort liegt, an dem die Krümmung der Fahrbahn am größten ist;
   v) Ermitteln (205) von Daten, die einen vierten Ort charakterisieren, wobei der vierte Ort vor dem dritten Ort und hinter dem ersten Ort liegt, wobei in diesem Schritt Daten bestimmt werden, die die maximale Steigung einer affinen Funktion charakterisieren, die die Krümmung der Fahrbahn mit dem ersten Ort und die Krümmung der Fahrbahn mit einem anderen Ort vor dem dritten Ort verbindet, anhand derer die Daten bestimmt werden, die den vierten Ort charakterisieren;
   vi) Daten für einen fünften Ort zu ermitteln (206), wobei der fünfte Ort sich hinter dem dritten Ort und vor dem zweiten Ort befindet, und
   vii) das Fahrzeuggeschwindigkeitsmanagement auf der Grundlage von Daten über den ersten Ort, Daten über den zweiten Ort, Daten über den vierten Ort und Daten über den fünften Ort veranlassen (207).

2. Verfahren nach Anspruch 1, **dadurch gekennzeichnet, dass** der Schritt vii) darin besteht, eine konstante Verringerung der Geschwindigkeit des Fahrzeugs zwischen dem ersten und dem vierten Ort, die Beibehaltung einer konstanten Geschwindigkeit zwischen dem vierten und dem fünften Ort und die konstante Erhöhung der Geschwindigkeit zwischen dem fünften und dem zweiten Ort zu bewirken.

3. Verfahren nach einem der vorhergehenden Ansprüche, **dadurch gekennzeichnet, dass** in den Schritten ii) und iii) Daten verwendet werden, die einen minimalen Krümmungsschwellenwert kennzeichnen.

4. Verfahren nach einem der vorhergehenden Ansprüche, **dadurch gekennzeichnet, dass** in Schritt vi) Daten ermittelt werden, die die minimale Steigung einer die Straßenkrümmung mit dem zweiten Ort und die Straßenkrümmung mit einem anderen Ort stromabwärts des dritten Ortes verbindenden affinen Funktion charakterisieren, anhand derer die den fünften Ort charakterisierenden Daten bestimmt werden.

5. Vorrichtung (100) zur Steuerung der Geschwindigkeit eines Kraftfahrzeugs in einer Kurve, **dadurch gekennzeichnet, dass** die Vorrichtung mindestens eine Informationsverarbeitungseinheit (101) umfasst, die mindestens einen Prozessor und ein Datenspeichermedium (102) umfasst, das konfiguriert ist, um ein Verfahren nach einem der vorhergehenden Ansprüche auszuführen.

6. Computerprogramm mit Programmcodeanweisungen zum Ausführen der Schritte eines Verfahrens nach einem der Ansprüche 1 bis 4, wenn das Programm von mindestens einem Prozessor ausgeführt wird.

7. Computerverwendbares Medium, **dadurch gekennzeichnet, dass** ein Programm nach Anspruch 6 darauf aufgezeichnet ist.

8. Kraftfahrzeug, **dadurch gekennzeichnet, dass** es eine Vorrichtung (100) nach Anspruch 5 umfasst.

**Claims**

1. Method of managing the speed of a motor vehicle in a bend using a computer device (100) on board the vehicle, the method comprising the steps of:

   i) obtaining (201), by interacting with a navigation system of the vehicle, data characterising the evolution of the curvature of the roadway as a function of the distance travelled;
   ii) determine (202), on the basis of the data characterising the evolution of the curvature of the road as a function of the distance travelled, data characterising a first location, said first location being located towards the entry of the turn;
   iii) determine (203), on the basis of the data characterising the evolution of the curvature of the road as a function of the distance travelled, data characterising a second location, said second location being located towards the exit of the turn;
   iv) determine (204), on the basis of the data on the development of the curvature of the carriageway as a function of the distance travelled, data on a third location, the third location being located at a location where the curvature of the carriageway is maximum;
   v) determining (205) data characterising a fourth location, said fourth location being located upstream to the third location and at the downstream of the first location , during which step data characterising the maximum slope of an affine function connecting the curvature of the roadway to the first location and the curvature of the roadway to another location upstream to the third location are determined, according to which data characterising the fourth location are determined;
   vi) determine (206) data characterising a fifth location, said fifth location being located at the downstream of the third location and upstream to the second location; and
   vii)(207) controlling the speed of the vehicle based on the data of the first location, the data of the second location, the data of the fourth location and the data of the fifth location.

2. Method as claimed in claim 1, wherein the step vii) consists in causing a constant decrease in the speed of the vehicle between the first location and the fourth location, the conservation of a constant speed between the fourth location and the fifth location and the constant increase in the speed between the fifth location and the second location .

3. Method according to claim 1, wherein data characterising a minimum threshold curvature value are used during steps ii) and iii).

4. Method according to claim 1, wherein, during step vi), data characterising the minimum slope of an affine function connecting the curvature of the roadway to the second location and the curvature of the roadway to another location at the downstream of the third location are determined, according to which data characterising the fifth location are determined.

5. Device (100) for managing the speed of a motor vehicle in a bend, wherein the device comprises at least one information processing unit (101), comprising at least one processor, and a data storage medium (102) configured to implement a method according to any one of the previous claims.

6. Computer plan comprising plan code instructions for executing the steps of a method according to any one of claims 1 to 4 when said plan is executed by at least one processor.

7. Medium usable in a computer, wherein a plan according to claim 6 is recorded therein.

8. Motor vehicle **characterised in that** it comprises a device (100) according to claim 5.

[Fig. 1]

[Fig. 2]

[Fig. 3]

201 — OBT CURV DTA

202 — DETR Ddebut

203 — DETR Dfin

204 — DETR Dcmax

205 — DETR Dlim1

206 — DETR Dlim2

207 — V(Ddebut, Dlim1, Dlim2, Dfin)

[Fig. 4]

[Fig. 5]

[Fig. 6]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2020139968 A

- US 2021300364 A